# EUROPEAN PATENT APPLICATION

(11) **EP 1 289 283 A2**
(43) Date of publication of application: **05.03.2003**
(21) Application number: 02017680.6
(22) Date of filing: 07.08.2002
(51) Int. Cl.: H04N 5/232

(54) **Autofocus device, imaging device and camera system**

(30) Priority: 08.08.2001 JP 2001240715
(71) Applicant: MATSUSHITA ELECTRIC INDUSTRIAL CO., LTD., Kadoma-shi, Osaka 571-8501 (JP)
(72) Inventor: Ike, Takahiro, Yokohama-shi, Kanagawa 223-8639 (JP)
(74) Representative: Balsters, Robert

(57) **Abstract**

When a camera lens is in the midst of pan operation or tilt operation and in an autofocusingmode (AFmode) (step S101), not normal autofocus processing, but wobbling AF processing (step S103) is carried out to move a focus lens constituting the camera lens forwardly or backwardly while oscillating the position of the focus lens forwardly/backwardly, and search the peak position of the high-frequency component value in an image signal picked up through the camera lens. Accordingly, the focus position can be searched with high precision even under operation.

## Description

### Background of the Invention

The present invention relates to an autofocus device for use in a monitoring camera or the like, and particularly to an autofocus device suitable for picking up object images in focus (point) at all times, an imaging device having the autofocus device mounted therein and a camera system.

An imaging device for a monitoring camera system or the like is equipped with a mechanism for subjecting a camera lens to a pan operation, a tilt operation in order to make the orientation of the camera lens follow the motion of an object when the object is moved. Further, in order to pick up a zoom-in image of the object, the imaging device is equipped with a zoom-in mechanism. Such a mechanism is a driving mechanism for mechanically moving a weighty camera or lens. Therefore, according to a conventional monitoring camera or the like, for example, as disclosed in Japanese Patent Publication No. Hei-9-261521, in order to enhance the durability of a lens driving system, the operation of a horizontal/vertical rotatable mount or the zoom operation of a zoom lens is carried out, and an autofocus device is actuated to focus on the object just after the horizontal/vertical rotatable mount or the zoom lens is stopped.

According to the conventional monitoring system or the like, when a mechanical driving system such as a pan operation mechanism or the like is operated, no focusing operation is carried out during the operation of the mechanical driving system, so that an image of an object is blurred during pan operation, tilt operation or zoom operation. When the blurring degree is large, the sight of an object may be lost, and thus the monitoring must be interrupted until the focusing processing is subsequently executed.

### Summary of the Invention

An object of the present invention is to provide an autofocus device which can pick up object images in focus even in the midst of a pan operation, a tilt operation or a zoom operation, an imaging device having the autofocus device mounted therein, and a camera system.

In order to attain the above object, an autofocus device for a camera having at least one of a rotatable mount and a camera lens is characterized by comprising first searching unit for searching the peak position of a high-frequency component value of an image signal picked up through the camera lens only when at least one of the rotatable mount and the camera lens is operated. Accordingly, object images in focus can be picked up even while the camera is under operation.

Preferably, the first searching unit searches the peak position when the operation speed of the operation is equal to a predetermined speed or less . Accordingly, when the object image varies intensively and it is difficult to make the autofocus follow the variation, no wasteful autofocus operation is carried out, so that the durability of the lens driving system can be enhanced.

Preferably, the first searching unit searches the peak position while the movement amount of the camera lens is limited to a small value when the operation is a pan operation or tilt operation. As described above, when the pan or tilt operation is instructed, the lens movement per unit time is restricted, so that hunting based on a misjudgment caused by image variation can be reduced.

Preferably, the first search unit searches the peak position when the operation is a zoom operation and also the zoom magnification is equal to a predetermined magnification or more. When the zoom magnification is low, the amount of out-of-focus is small even when the zoom operation is carried out, and thus it is unnecessary to carry out the wasteful autofocus processing.

Preferably, the autofocus device further comprises second searching unit for searching the peak position of a high-frequency component value in an image signal picked up through the camera lens again when the operation is carried out and the camera lens stops the operation, a pan operation or a tilt operation. By providing the second searching unit, even when the distance to the object is greatly varied and thus focusing is impossible during pan, tilt operation or zoom operation, the focusing can be performed after the operation is stopped.

Preferably, the search of the peak position of the first searching unit is carried out with the highest priority when there is an operating instruction on the operation during the searching operation of the peak position of said second searching unit. Accordingly, when an operating instruction of the camera lens is input, a response can be immediately made to the operating instruction, and also images in focus can be picked up.

Preferably, in the above autofocus device, the operating instruction of the operation is a manual operation instruction from a remote place. Accordingly, only when the camera lens is subjected to the manual operation, the autofocus by the search unit can be performed.

In order to attain the above object, an imaging device has any autofocus device described above. Accordingly, images in focus can be picked up at all times, and a wasteful autofocus operation can be prevented from being carried out at times other than the operation time.

In order to attain the above object, an imaging device is characterized by comprising a camera lens having a zoom lens and a focus lens, a pan operation unit for subjecting the camera lens to a pan operation, a tilt operation unit for subjecting the camera lens to a tilt operation and the autofocus device described above. Accordingly, object images in focus can be picked up even in the midst of at least one of the zoom operation, the pan operation and the tilt operation.

In order to attain the above object, a camera system is characterized by comprising the above imaging device mounted fixedly, a monitor for displaying a pickup image from the camera lens and a controller that is connected to the imaging device and outputs the operating instruction to the imaging device when a manual operation is input. Accordingly, object images in focus can be displayed on the monitor even in the midst of a pan operation or the like which is carried out by remotely operating the camera.

### Brief Description of the Drawings

Fig. 1 is a flowchart showing the processing procedure of the autofocus processing during pan operation or the like which is executed in an autofocus device according to an embodiment of the present invention;
Fig. 2 is a diagram showing a monitoring camera system to which an imaging device according to the embodiment of the present invention is applied;
Fig. 3 is a diagram showing the imaging device according to the embodiment of the present invention;
Fig. 4 is a flowchart showing the processing procedure executed in the imaging device according to the embodiment of the present invention;
Fig. 5 is a diagram showing the focus position searching processing by the autofocus device according to the embodiment of the present invention;
Fig. 6 is a diagram showing the mountain searching processing by the autofocus device according to the embodiment of the present invention; and
Fig. 7 is a tracking curve of a camera lens system mounted in the imaging device according to the embodiment of the present invention.

### Detailed Description of the Preferred Embodiment

An embodiment of the present invention will be described hereunder with reference to the drawings.

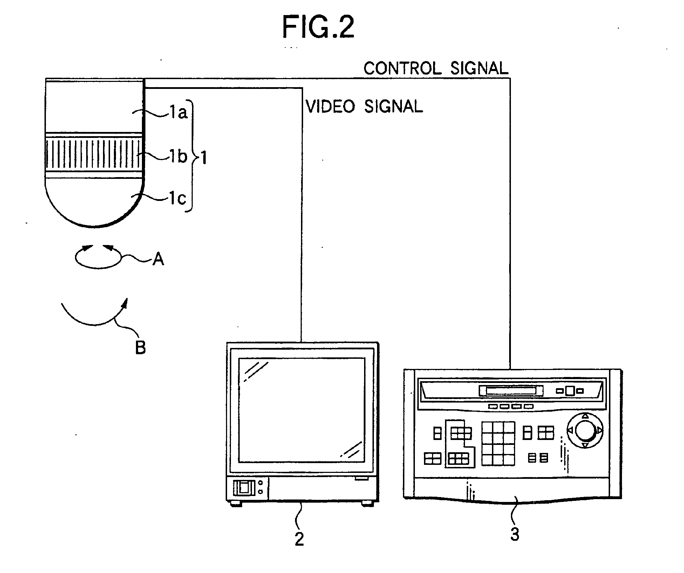

Fig. 2 is a diagram showing the construction of amonitoring camera system to which an imaging device according to an embodiment of the present invention is applied. The monitoring camera system includes a camera (imaging device) 1 mounted on a ceiling or the like, a monitor 2 for displaying a pickup image from the camera 1 on a screen and a controller 3 for controlling the camera 1 from a remote place.

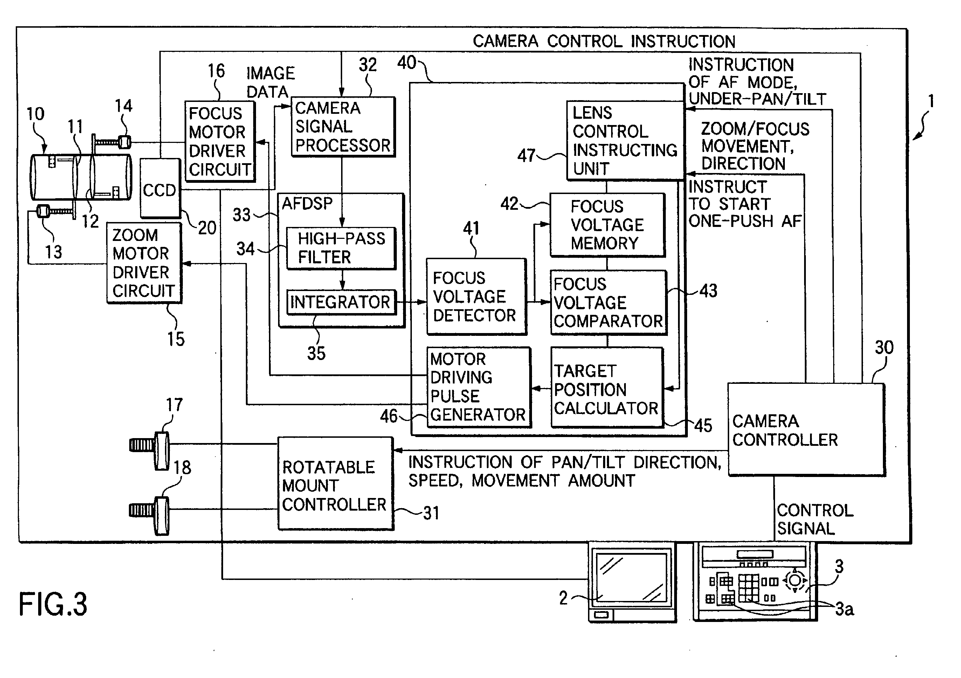

The camera 1 is equipped with a fixed mount 1a fixed on the ceiling, a rotatable mount (a pan mechanism for the camera 1) 1b which is freely rotatably secured to the fixed mount 1a, a camera lens system (reference numeral 10 of Fig. 3) described later which is mounted in a semi-spherical case 1c integrally-fixed to the rotatable mount 1b, and a tilt mechanism (not shown) for controlling the depression-angle direction of the camera lens over the direction of an arrow B.

The monitor 2 takes in a video signal from an image pickup element (reference numeral 20 of Fig. 3) like CCD mounted at the focus position of the camera lens, and displays it on a screen. The controller 3 has a front panel equipped with various buttons 3a, etc. through which manual operation instructions of a surveillant are input, and each operation instruction is output to the camera 1 to carry out a pan operation, a tilt operation and a zoom operation on the camera 1.

Fig. 3 is a diagram showing the internal construction of the camera 1 described above. The camera lens system 10 of the camera 1 has a zoom lens 11 and a focus lens 12. The position of the zoom lens 11 in a lens barrel is moved forwardly/backwardly (the direction approaching to the object is defined as "forwardly" and the direction approaching to the image pickup element is defined as "backwardly") by a zoom motor (stepping motor) 13, and the position of the focus lens in the lens barrel is moved forwardly/backwardly by a focus motor (stepping motor) 14. The zoommotor 13 is supplied with driving power from a zoom motor driver circuit 15, and the focus motor 14 is supplied with driving power from a focus motor driver circuit 16.

In the camera 1, a pan motor 17 for driving the pan mechanism (rotatable mount) 1a shown in Fig. 2 and a tilt motor 18 for driving the tilt mechanism (not shown) are equipped.

An electrical control system of the camera 1 includes a camera controller 30 for outputting various kinds of control signals in response to manual operation instructions from the controller 3, a rotatable mount controller 31 for controlling the pan motor 17 and the tilt motor 18 on the basis of an instruction from the camera controller 30, a camera signal processor 32 for receiving video data signals output from the image pickup element 20 and outputting the data on the basis of an instruction from the camera controller 30, AFDSP (Auto Focus Digital Signal Processor) 33 for processing the video data signals output from the camera signal processor 32 and outputting the voltage corresponding to the focusing degree, and a lens controller 40 (autofocus device) for outputting driving pulse signals to the zoom motor driver circuit 15 and the focus motor driver circuit 16 on the basis of the control instruction from the camera controller 30 and the output signal from AFDSP 33.

The rotatable mount controller 31 generates control signals based on a pan direction instruction, a tilt direction instruction, moving speed instructions of both the pan and tilt directions and movement amount instructions of both the pan and tilt directions output from the camera controller 30 to control the pan motor 17 and the tilt motor 18, thereby controlling the rotational angle in the direction of an arrow A and the depression angle in the direction of the arrow B shown in Fig. 2.

The video data signals output from the image pickup element 20 disposed at the focus position of the camera lens system 10 are output to the monitor 2, and also taken into AFDSP 33 through the camera signal processor 21. AFDSP 33 outputs the integration value of the high-frequency components of the video data signals thus taken, and it has a high-pass filter 34 for extracting the high-frequency components from the video data signals, and an integrator 35 for integrating the high-frequency components thus extracted. As the output value of the integrator 35 is larger, that is, the amount of the high-frequency components is larger, a shaper image in focus can be achieved on the screen. Therefore, the voltage corresponding to the output of the integrator 35 is called as "focus voltage".

The lens controller 40 includes focus voltage detector 41 for detecting the output of the integrator 35, a focus voltage memory 42 for storing the focus voltage value before the lens is moved, a focus voltage comparator 43 for comparing the present detection value of the focus voltage detector 41 with the content of the focus voltage memory 42 (previous detection value), a target position calculator 45 for calculating the movement target position of the lens in accordance with the output of the focus voltage comparator 43, a motor driving pulse generator 46 for generating pulses to move each of the focus lens 12 and the zoom lens 11 by only the amount corresponding to the difference between the movement target position of each of the focus lens 12 and the zoom lens 11 output from the target position calculator 45 and the present position and outputting the pulses thus generated to each of the driver circuits 16, 15, and a lens control instructing unit 47.

The purpose of comparing the focus voltages before and after the movement of the lens in the focus voltage comparator 43 is to move the focus lens 12 in the increasing direction of the focus voltage and achieve focus, thereby performing a focus position search based on a well-known so-called climbing method.

Upon receipt of the control instruction from the camera controller 30, the lens control instructing unit 47 controls the lens controller 40 as described in detail later, and performs the autofocus processing even during the pan operation, title operation or zoom operation.

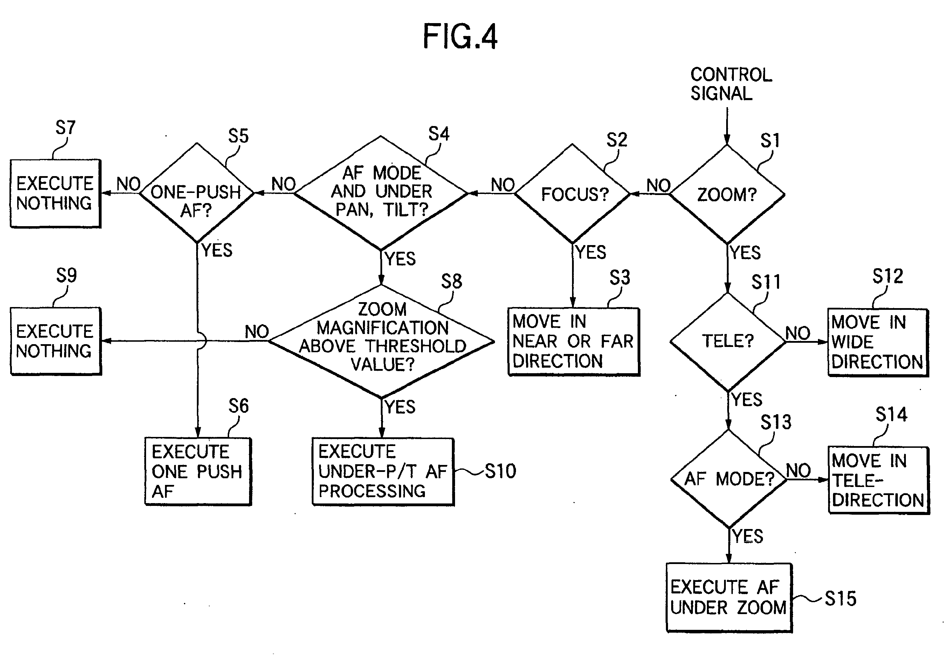

Fig. 4 is a flowchart showing the processing procedure of controlling the lens controller 40 upon receipt of the control signal from the camera controller 30. Upon receipt of the control signal from the camera controller 30, the lens control instructing unit 47 first judges in step S1 whether a zoom instruction to move the zoom lens 11 is contained in the control signal. If there is no zoom instruction, the processing goes to step S2 to judge whether a focus (FOCUS) instruction is contained or not.

The focus instruction is an instruction to make a surveillant perform manual focusing, and the surveillant inputs a near (NEAR) direction movement instruction or a far (FAR) direction movement instruction from the controller 3. When the focus instruction is output as a control signal from the camera controller 30 to the lens control instructing unit 47, the processing goes from step S2 to step S3 to move the focus lens 12 according to the instruction.

If it is judged in step S2 that no focus (FOCUS) signal is contained in the control signal, the processing goes to step S4 to judge whether the present set condition of the camera is in an autofocus (AF) mode and during pan operation, tilt operation. If it is neither in the AF mode nor during pan operation, tilt operation, the processing goes to step S5 to judge whether it is a one-push AF instruction or not.

The one-push AF instruction is an instruction to actuate the autofocus function only once when the pan operation, the tile operation is finished and kept under stop state as disclosed in the Japanese Patent Publication No. Hei-9-261521 described above. When the one-push AF instruction is input from a surveillant, the processing goes from step S5 to step S6 to actuate the autofocus function and position the focus lens 12 to the focus position through the climbing search. If it is judged in step S5 that it is not the one-push AF instruction, the processing goes to step S7 to execute nothing and the processing of Fig. 4 is finished.

If it is judged in step S4 that the present set condition is in the AF mode and during the pan operation, the tilt operation, the processing goes to step S8 to judge whether the present zoom magnification is equal to a threshold value or more. If the zoom magnification does not reach the threshold value, the processing goes to step S9 to execute nothing and the processing of Fig. 4 is finished because there is little out-of-focus even when the pan operation or tilt operation is carried out without performing the focusing operation.

As a judgment result of step S8, if it is judged that the zoom magnification is equal to the threshold value or more, the processing goes to step S10. In step S10, during the pan operation, during the tilt operation, the autofocus processing is simultaneously carried out (this processing is hereinafter referred to as AF processing under P/F). That is, even when the orientation direction of the camera is being changed, the focus processing is carried out in the AF mode.

However, even when the focus processing is merely carried out in the normal AF mode, images picked up by the image pickup element 20 are those images which are successively positionally displaced little by little (that is, images of a varying object), so that the value of the focus voltage output from AFDSP 33 (this value is referred to as VL value) is also varied and thus it is impossible to search the focus position. Therefore, according to this embodiment, the focus searching during the pan operation, during the tilt operation is carried out by wobbling AF described later.

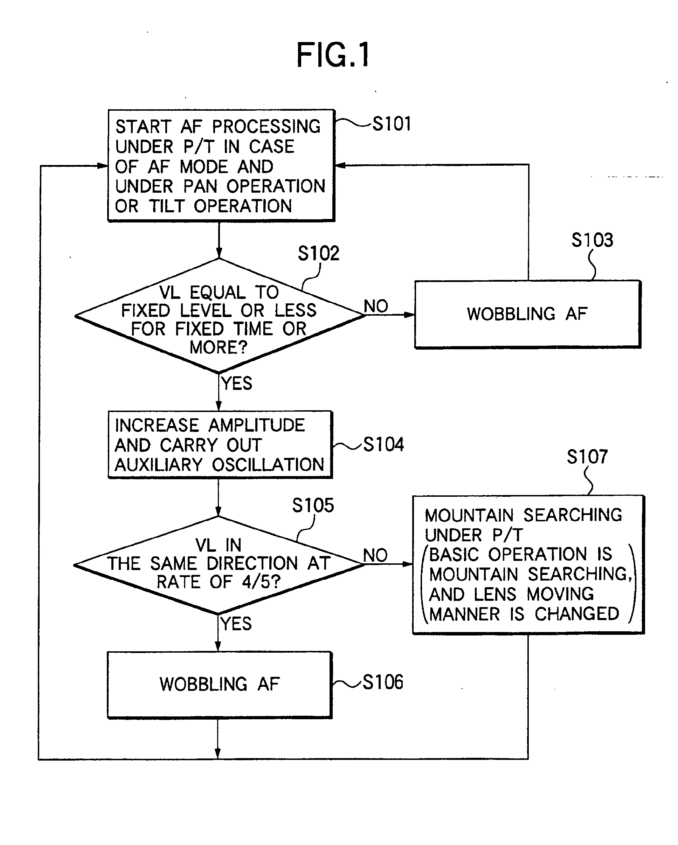

Fig. 1 is a flowchart showing the detailed processing procedure of the step S10 shown in Fig. 4. According to this embodiment, when the processing enters the step S10 of Fig. 4, the AF processing under P/T is started in step S101 of Fig. 4, and then the processing goes to step S102. The image pickup element 20 of the camera 1 successively takes in images of 30 frames per second for example, and transmit them to AFDSP 33. The processing loop of Fig. 1 is carried out at one cycle every time the image pickup element 20 takes in two images (images of two frames).

In step S102, it is judged whether the integration value (VL value) of the high-frequency component in a pickup image is equal to a fixed level or less for a fixed time period or more (for example, the time period for which the image pickup element 20 takes in images of 10 frames).

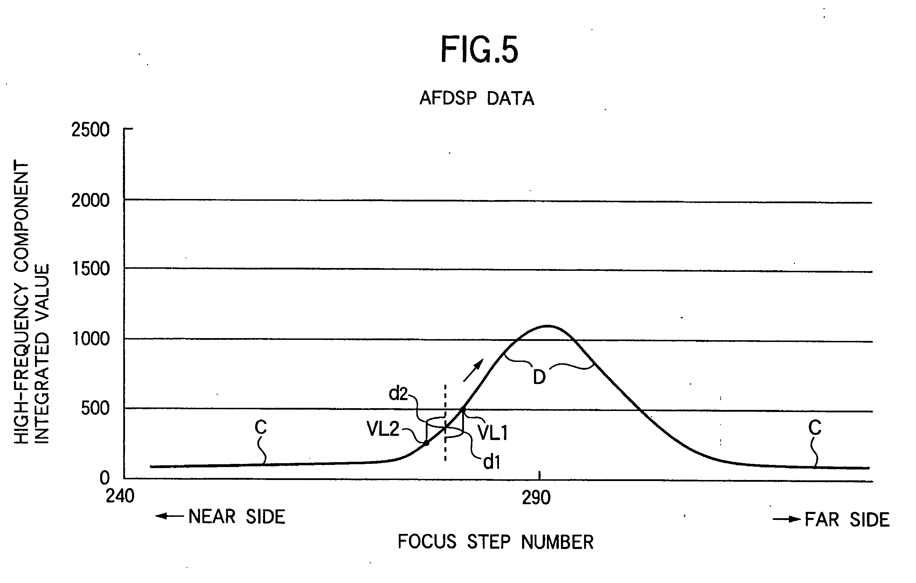

As shown in Fig. 5, the VL value varies like a mountain with respect to the number of movement steps of the focus lens 12. In Fig. 5, the step number "290" corresponds to the top of the mountain (focus position), and in order to search the position of the top of the mountain, the direction in which the VL values before and after the step movement of the focus lens 12 is increased is determined by a focus voltage comparator 43 of Fig. 3.

The graph of the VL value shown in Fig. 5 is achieved by plotting the VL values of images which are pickup images of the same object, however, are different in focus degree. Therefore, it is needless to say that variation of the VL value is causedby only variation of focus. However, the images picked up during the pan operation, during the tilt operation are images of an object that is positionally displaced little by little, so that it is difficult to say that the variation of the VL value is caused by only the focus variation, and it is also caused by variation of the object.

Therefore, according to this embodiment, the focus position is determined with high precision by applying a so-called wobbling AF technique to the search of the focus position during the pan operation, during the tile operation. Here, as is apparent from the variation graph of the VL value of Fig. 5, it is unrecognizable from the variation of the VL value at the foot portion C of the mountain whether the direction to the top of the mountain is the right-hand direction or left-hand direction, however, the direction to the top of the mountain is recognizable from the variation of the VL value at the slope portion D of the mountain.

Therefore, on the basis of the judgment as to whether the VL value is equal to a fixed level or less for a fixed time, it is judged whether the present step position of the focus lens is located at the foot portion C of the mountain or at the slope portion D of the mountain. In the example of Fig. 5, it can be identified on the basis of the level "200" on the axis of ordinate.

As a judgment result, if the present position of the focus lens is located at the slope portion D of the mountain (the judgment result is N), the wobbling AF processing of step S103 is carried out to identify the direction to the top of the mountain . The wobbling AF processing is not the processing of advancing the position of the focus lens by one step and comparing the VL values before and after the advancement, but the processing of comparing the value VL1 of the VL value of a pickup image at the position d1 (see Fig. 5) advanced from the focus lens position to the far side by only one step with the value VL2 of the VL value of a pickup image located at the position d2 returned from the focus lens position to the near side by only one step, and then setting the step oscillating side providing a larger VL value, that is, the direction to the position d1 side as the direction to the top of the mountain. When the focus lens position is advanced in the d1 direction by two steps and then the processing enters the next processing of Fig. 1, the processing of oscillating the focus lens 12 to each of the far and near sides by one step and performing the comparison in VL value is repeated to determine the focus position.

If it is judged in step S102 of Fig. 1 that the present position of the focus lens is located at the foot portion C of the mountain (the judgment result is Y), the processing goes to the next step S104 to carry out an auxiliary oscillation having larger amplitude. In the above-described wobbling AF, the focus lens 12 is oscillated to each of the near side and the far side every step. However, in this case, the step position of the focus lens is oscillated to each of the far side and the near side every five steps. Thereafter, the VL value is determined, and it is judged whether the VL value is increased in the same direction at four or more times out of the five times (Step S105).

If the present position of the focus lens is in the neighborhood of the boundary between the foot portion C and the slope portion D of the mountain, increase in amplitude of the auxiliary oscillation makes it possible to know the direction to the mountain. That is, since the VL value determined at the position where the step number enters the slope portion D of the mountain through the oscillation increases, the processing goes from step S105 to step S106, and the same wobbling AF processing as described above is carried out to search the top of the mountain.

As a result of the judgment in step S105, if the VL value is undeterminable (the judgment result is N), it is judged that it is impossible to escape from the foot portion C of the mountain and thus the processing goes to step S107 to perform mountain searching processing different from the wobbling AF processing. In this embodiment, the position of the top of the mountain is determined by moving the position of the focus lens over all the movable required range.

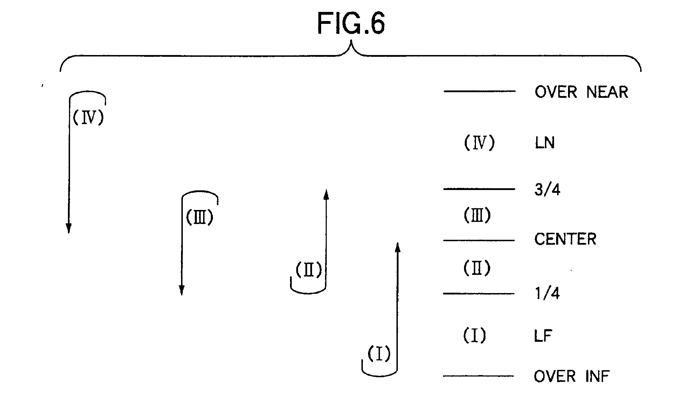

Fig. 6 is a diagram showing the scheme of the mountain searching processing executed in step S107. The moving range of the "OVER INF" position at the farthest side of the focus lens 12 to the "OVER NEAR" position at the nearest side of the focus lens 12 is divided into four areas (I), (II), (III), (IV) by "1/4" position, "center (CENTER)" position and "3/4" position. The following cases are assumed in accordance with the area where the focus lens 12 is located when the processing enters the step S107 of Fig. 1, and a point at which the VL value varies from a non-variation state of the VL value (a state where image blurring is intense) is searched while moving the position of the focus lens 12 at high speed.
(I) In the case where the position of the focus lens is located in the area (I), it is moved to the "OVER INF" position and then positionally inverted. Thereafter, the VL value is determined while moving to the "CENTER" position, and the processing is finished.
(II) In the case where the position of the focus lens is located in the area (II), it is moved to the "1/4" position and then positionally inverted. Thereafter, the VL value is determined while moving to the "3/4" position, and the processing is finished.
(III) In the case where the position of the focus lens is located in the area (III), it is moved to the "3/4" position and then positionally inverted. Thereafter, the VL value is determinedwhilemovingtothe"1/4"position, and the processing is finished.
(IV) In the case where the position of the focus lens is located in the area (IV), it is moved to the "OVER NEAR" position and then positionally inverted. Thereafter, the VL value is determined while moving to the "CENTER" position, and the processing is finished.

If it is judged in step S1 of Fig. 4 that the instruction is a zoom instruction, the processing goes to step S11 to judge whether the zoom instruction is an instruction to move the zoom lens 11 to the telescope side (tele-side). If the judgment result is negative (N), that is, it is an instruction to move the zoom lens to the wide side, the processing goes to step S12 to make the zoom lens 11 zoom in to the wide side, and the processing of Fig. 4 is finished.

If the judgment result of step S11 is positive (Y), the processing goes to step S13 to judge whether an instruction of the AF mode is input at the same time. If no AF mode instruction exists, the processing goes to step S14 to make the zoom lens 11 zoom in to the tele-side, and the processing of Fig. 4 is finished.

If the judgment result of step S13 is positive (Y), that is, the AF mode instruction is input, the processing goes to step S15 and the autofocus processing is carried out in parallel even during zooming. According to this embodiment, the processing in the step S15 is carried out on the basis of wobbling AF in the same way as described above.

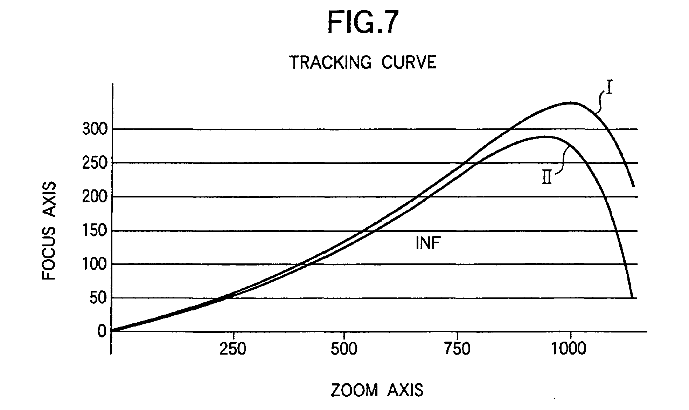

The focus lens 12 of this embodiment is an inner focus lens, and when the zoom magnification is varied while bringing the focus lens 12 into focus, it is moved along the tracking curve inherent to the lens. Fig. 7 shows an example of the tracking curve. As shown in Fig. 7, the lens-inherent tracking curve contains two tracking curves, one tracking curve I focusing on a short-distance (1.6m) point and the other tracking curve II focusing on a point at infinity.

Both the tracking curves are substantially coincident with each other when the zoom magnification is not high, and a focus lens is moved along any one of the tracking curves in conformity with the zooming of a zoom lens, whereby the zooming can be performed under the state that the focusing is established at all times. However, as the magnification of the zoom lens is raised, the gap between both the curves is larger, and the focus lens position at which the focusing is actually established is coincident with any position between both the curves. Therefore, even when the focus lens is moved according to the tracking curve, an image is more remarkably defocused as the focus lens is moved nearer to the tele-side.

Therefore, according to this embodiment, the focus point position is searched with high precision by the wobbling AF, so that images in focus can be picked up at all times. That is, in the same manner as described above, the VL value is observed while oscillating the moving step forwardly/backwardly every predetermined number of steps when the focus lens is moved, and the top of the mountain of the VL value is searched.

Although a description is omitted from the above embodiment, the operation speed of each of the pan operation, the tilt operation and the zoom operation may be instructed from the controller 3. When a high speed which is not less than a predetermined speed is required as the operation speed, if there is used a manner of carrying out the pan operation or the like with the highest priority without carrying out the auto focus processing based on the wobbling AF and then carrying out the focusing by using a normal autofocus technique such as one-push AF or the like, the focusing on an object can be consequently established in a shorter time.

When a manual operation instruction is input in the midst of the normal autofocus processing based on the one-push AF or the like and the pan operation or the like is carried out on the basis of this operation instruction, the normal auto focusing processing is stopped and the autofocus processing based on the wobbling AF is carried out with the highest priority.

According to the embodiment described above, the processing of automatically searching the focus point position is carried out to control the focus lens position to the optimal position even in the midst of the pan operation of the imaging device (camera), even in the midst of the tilt operation and even in the midst of the zoom operation. Therefore, object images in focus can be picked up even during each operation, and a surveillant never loses sight of an object, so that it is prevented from interrupting monitoring of the object.

According to the autofocusing during each operation, even when the object is greatly varied, the hunting of the focus lens can be reduced because the focusing movement is minimized. Further, even when an image is more intensely blurred by autofocus under operation, the operation is once stopped and the one-push AF is instructed to start the normal autofocusing, whereby an image under excellent focus condition can be immediately picked up.

According to the embodiment described above, the autofocus operation is prevented from being carried out unless the manual operation is carried out by a surveillant or the like. This is because this manner can remarkably shorten the lens driving time as compared with the manner of monitoring brightness variation in an image and starting the autofocusing on the basis of a judgment of an object variation. Accordingly, this embodiment can greatly enhance the durability of the lens driving system.

According to the present invention, object images in focus can be picked up even in the midst of the pan operation, tilt operation or zoom operation of the imaging device.

## Claims

1. An autofocus device comprising for a camera having at least one of a rotatable mount and a camera lens, comprising a first searching unit for searching the peak position of a high-frequency component value of an image signal picked up through said camera lens only when at least one of said rotatable mount and said camera lens is operated.

2. The autofocus device as claimed in claim 1, wherein said first searching unit searches the peak position when the operation speed of the operation is equal to a predetermined speed or less.

3. The autofocus device as claimed in claim 1, wherein said first searching unit searches the peak position while the movement amount of said camera lens is limited to a small value when the operation is a pan operation or tilt operation.

4. The autofocus device as claimed in claim 1, wherein said first search unit searches the peak position when the operation is a zoom operation and also the zoom magnification is equal to a predetermined magnification or more.

5. The autofocus device as claimed in claim 1, further comprising a second searching unit for searching the peak position of a high-frequency component value in an image signal picked up through said camera lens again when the operation is carried out and said camera lens stops the operation, a pan operation or a tilt operation.

6. The autofocus device as claimed in claim 5, wherein the search of the peak position of said first searching unit as claimed in claim 1 is carried out with the highest priority when there is an operating instruction on the operation during the searching operation of the peak position of said second searching means.

7. The autofocus device as claimed in claim 1, wherein the operating instruction of the operation is a manual operation instruction from a remote place.

8. An imaging device having an autofocus device as claimed in claim 1.

9. An imaging device comprising:
a camera lens having a zoom lens and a focus lens;
a pan operation unit for subjecting said camera lens to a pan operation;
a tilt operation unit for subjecting said camera lens to a tilt operation; and
an autofocus device as claimed in claim 1.

10. A camera system comprising:
a imaging device as claimed in claim 9;
a monitor for displaying a pickup image from said camera lens; and
a controller connected to said imaging device and outputting the operating instruction to said imaging device when a manual operation is input.
